(19) **Europäisches Patentamt**

**European Patent Office**

**Office européen des brevets**

(11) **EP 0 825 232 B1**

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(51) Int Cl.$^7$: **C09B 67/24**, C09D 5/00, C09D 139/06, D06P 3/30, D06P 3/32, C14C 11/00, D06P 1/52, D21H 21/28

(21) Anmeldenummer: **97113933.2**

(22) Anmeldetag: **13.08.1997**

(54) **Mischungen sulfogruppenhaltiger 1 : 2-Metallkomplexfarbstoffe mit Vinylpolymeren**

Mixtures of 1 : 2 metal complex dyes bearing sulfo groups and vinyl polymers

Mélanges de colorants complexes métalliques 1 : 2 portants des groupes sulfoniques avec des polymères vinyliques

(84) Benannte Vertragsstaaten:
**CH DE ES FR GB IT LI**

(30) Priorität: **20.08.1996 DE 19633484**

(43) Veröffentlichungstag der Anmeldung:
**25.02.1998 Patentblatt 1998/09**

(73) Patentinhaber: **BASF AKTIENGESELLSCHAFT**
**67056 Ludwigshafen (DE)**

(72) Erfinder:
• **Kessel, Knut, Dr.**
  **68161 Mannheim (DE)**
• **Patsch, Manfred, Dr.**
  **67157 Wachenheim (DE)**
• **Herrmann, Manfred, Dr.**
  **67061 Ludwigshafen (DE)**
• **Reiner, Kurt**
  **12210 Jakarta Seatan (ID)**
• **Jessen, Jörg L., Dr.**
  **67346 Speyer (DE)**
• **Wiesenfeldt, Matthias, Dr.**
  **67125 Dannstadt-Schauernheim (DE)**

(56) Entgegenhaltungen:
EP-A- 0 028 379     DE-A- 2 143 104
FR-A- 1 583 675     FR-A- 2 095 903
FR-A- 2 388 028     FR-A- 2 468 633

• DATABASE WPI Derwent Publications Ltd., London, GB; AN 89-143190 XP002097111 & RO 95 762 A (INTR COLORANTI COLOROM INST CHIM BUCURESTI )

**Beschreibung**

Die Erfindung betrifft flüssige oder feste Mischungen von sulfogruppenhaltigen 1 : 2-Metallkomplexfarbstoffen mit einem salzgehalt von weniger als 3 Gew. % und Poly-N-vinylpyrrolidon oder Copolymeren aus N-Vinylpyrrolidon und Vinylacetat.

Aus der DE-OS 28 13 982 ist ein Verfahren zur Herstellung von wasserlöslichen Farbstoffen in Form von Granalien bekannt, bei dem in eine wäßrige Paste des Farbstoffes ein anionisches oberflächenaktives Mittel und ein wasserlösliches Polymer eingebracht werden und die Paste dann sprühgetrocknet wird. Als Polymer wird in Anspruch 5 auch Poly- (N-vinyl-$\alpha$-pyrrolidon) genannt. Als Farbstoffe werden Reaktivfarbstoffe bevorzugt.

In der DE-OS 29 35 861 sind Tinten beschrieben, die Nigrosin und Poly-N-vinylpyrrolidon enthalten und sich für Tintenstrahldrucker eignen.

Schließlich sind in der rumänischen Schrift 95762 B1 vom 30.10.88 Lösungen beschrieben, die neben bestimmten Lösungsmitteln einen sulfonsäuregruppenfreien Metallkomplexfarbstoff und Polyvinylpyrrolidon enthalten. Es handelt sich dabei um eine Lösung, die überwiegend organische Lösungsmittel enthält und die für die Verwendung mit weiterem Lösungsmittel verdünnt wird.

D1: FR-A-2 468 633 offenbart ein Verfahren zur Granulierung von monosulfonierten wasserlöslichen symmetrischen 1:2-Metallkomplexazofarbstoffen durch Wirbelschichttrocknung. Ziel ist es, ein staubfreies Granulat mit bestimmten Eigenschaften zu erhalten.

D2: FR-A-2 095 903 betrifft ein Verfahren zur Verkleinerung der Teilchengröße von metallhaltigen und metallfreien Farbstoffen durch Vermahlung und Sprühtrocknung einer wässrigen Suspension des Farbstoffes und eines Dispergators. Ziel ist es, die Kaltwasserlöslichkeit der Farbstoffe zu erhöhen.

Sulfongruppenhaltige 1 : 2-Metallkomplexe werden in einem breiten Anwendungsbereich zum Färben unterschiedlichster Materialien verwendet, wobei ein Anwender meist ganz individuelle Farbstofflösungen mit verschiedensten Lösungsmittelmischungen verwenden möchte. Demzufolge lagen der vorliegenden Erfindung stabile Mischungen als Aufgabe zugrunde, aus denen beim Lösen oder Verdünnen durch den Anwender keine Feststoffe ausfallen.

Demgemäß wurden die obengenannten flüssigen und festen Mischungen gefunden.

Poly-N-vinylpyrrolidone sind aus dem Stand der Technik bekannt, ebenso die Copolymerisate. Für die erfindungsgemäßen Mischungen werden zweckmäßigerweise Poly-N-vinylpyrrolidone mit mittleren Molgewichten (Gewichtsmittel) von ungefähr 2000 bis 60 000, vorzugsweise 2 000 bis 11 000, und Copolymere mit bis zu 40 Mol %, vorzugsweise 30 bis 40 Mol-%, Vinylacetat mit Molgewichten von 45 000 bis 70 000, vorzugsweise 45 000 bis 60 000, verwendet.

Sulfogruppenhaltige 1:2-Metallkomplexfarbstoffe sind ebenfalls sehr zahlreich aus dem Stand der Technik bekannt; im Hinblick auf den Verwendungszweck eignen sich insbesondere Co- und vorzugsweise Cr-Komplexe. Besonders bevorzugt sind Farbstoffe, die unter Berücksichtigung ihrer Echtheitseigenschaften für das Färben von Papier und vorzugsweise Holz sowie Pelz und vorzugsweise für Leder geeignet sind.

Die Komplexfarbstoffe sollten in möglichst salzarmer Form in die erfindungsgemäßen Mischungen eingearbeitet werden, d.h. sie sollten möglichst salzarm hergestellt oder nach der Synthese von der Hauptmenge der Salze befreit werden. Die entsprechenden Methoden dazu sind bekannt.

Bei den festen erfindungsgemäßen Mischungen richtet sich das Mischungsverhältnis zwischen Komplexfarbstoff und Polymeren nach der gewünschten Farbstärke. In der Regel enthält die Feststoffmischung 1 bis 20 Gew.-%, vorzugsweise 5 bis 15 Gew.-%, an Poly-N-vinylpyrrolidon oder Copolymeren aus N-Vinylpyrrolidon und Vinylacetat. Sie werden zur Einstellung des Sollwertes der Farbstärke benötigt; der Rest der Mischung besteht im wesentlichen aus Farbstoff.

Die festen erfindungsgemäßen Mischungen können auch noch weitere Komponenten beispielsweise Entstaubungsmittel enthalten. Geeignete Staubbindemittel bestehen z.B. aus bestimmten Petroleumfraktionen, die als Emulgiermittel ansulfierte Anteile enthalten können.

Bevorzugt sind in den erfindungsgemäßen festen Mischungen 0,1 bis 4 Gew.-%, vorzugsweise 0,5 bis 2 Gew.-% Entstaubungsmittel und 1 bis 20 Gew.-% Poly-N-vinylpyrrolidon oder Copolymeren aus N-Vinylpyrrolidon und Vinylacetat enthalten.

Zur Herstellung der festen erfindungsgemäßen Mischungen werden die Komplexfarbstoffe zweckmäßigerweise in weitgehend trockener Form (z.B. schrank- oder vorzugsweise sprühgetrocknet) mit den ebenfalls festen (z. B. auch sprühgetrockneten) Poly-N-vinylpyrrolidon oder Copolymeren aus N-Vinylpyrrolidon und Vinylacetat bis zur Homogenität gemischt. Es ist aber auch möglich, die Komponenten der Mischung in gelöster oder suspendierter Form zu mischen und dann erst zu trocknen.

Zur Überführung der festen erfindungsgemäßen Mischungen in Stammlösungen für Färbezwecke können sie in Wasser oder bevorzugt in organischen Lösungsmitteln oder Gemischen von Wasser und organischen Lösungsmitteln gelöst werden. Als organische Lösungsmittel 5 eignen sich vorzugsweise Glykole, Glykolether, Glykolester sowie ihre Mischungen. Beispielhaft sind 1,2-Propylenglykol, 1-Methoxy-2-propylacetat, 1-Methoxy-2-propanol, Dipropylenglykolmonomethylether, Butylglykol oder Butyldiglykol zu nennen.

Die festen erfindungsgemäßen Mischungen zeichnen sich dadurch aus, daß sie eine ausgezeichnete Löslichkeit aufweisen und vorzüglich zum Färben von Papier und vorzugsweise Holz geeignet sind. Zum Färben von Holz sind wasserarme oder wasserfreie Lösungen besonders geeignet, weil dann kein Quellen des Holzes auftritt.

Die flüssigen, überwiegend wasserhaltigen Mischungen enthalten bezogen auf ihr Gesamtgewicht 1 bis 12 % Poly-N-vinylpyrrolidon oder Copolymere aus N-Vinylpyrrolidon und Vinylacetat und gegebenenfalls organische Lösungsmittel. Dabei ist unter überwiegend wasserhaltig ein Wasser/organisches Lösungsmittel Verhältnis größer 1 zu verstehen.

Für diese flüssigen Mischungen eignen sich als organische Lösungsmittel vor allem mit Wasser mischbare Lösungsmittel wie Glykole, Glykolether, Glykolester, Polyether-Alkanole aus Ethylenoxid oder Tetrahydrofuran, Dimethylformamid, N-Methylpyrrolidon oder Gemische davon.

Bevorzugt werden flüssige überwiegend wasserhaltige Mischungen, enthaltend bezogen auf ihr Gesamtgewicht 1 bis 12 % Poly-N-vinylpyrrolidon oder Copolymere und als organische Lösungsmittel Glykole, Glykolether, Glykolester, Polyether-Alkanole aus Ethylenoxid oder Tetrahydrofuran, Dimethylformamid, N-Methylpyrrolidon oder Gemische davon.

Die überwiegend wasserhaltigen Lösungen enthalten in der Regel 10 bis 30, vorzugsweise 15 bis 25 Gew.-%, Farbstoff und 1 bis 12, vorzugsweise 2 bis 10, insbesondere 3 bis 7 Gew.-%, Polymere. Der Rest besteht aus bis zu 10, vorzugsweise 2 bis 6 Gew.-%, Lösungsmittel und Wasser.

Die flüssigen, überwiegend wasserhaltigen erfindungsgemäßen Mischungen erhält man aus salzarm hergestellten 1 : 2-Metallkomplexfarbstoffen, die entweder als Pasten, Suspensionen oder warme Lösungen vorliegen, durch Vermischen mit festem oder vorzugsweise überwiegend wäßrigen Lösungen von Polyvinylpyrrolidon oder dessen Copolymeren.

Die Lösungsmittel können vor, während oder nach der Synthese der Farbstoffe oder aber auch bei der Einstellung der Handelsform zugegeben werden.

Wenn eine Klärfiltration notwendig ist, wird diese zweckmäßigerweise in Gegenwart der Lösungsmittel aber vor der Zugabe der Polymeren durchgeführt.

Die flüssigen, überwiegend wasserhaltigen Mischungen eignen sich insbesondere, gegebenenfalls nach Verdünnung auf Anwendungskonzentration, zum Zurichten und Färben von Leder und Pelz.

Hervorzuheben sind die Lagerstabilität, Kältestabilität und günstige Viskosität der erfindungsgemäßen flüssigen, überwiegend wasserhaltigen Mischungen, die einzeln oder auch in Kombination verwendet werden können.

In den folgenden Beispielen beziehen sich Angaben über Teile und Prozente, sofern nicht anders vermerkt, auf das Gewicht.

Im folgenden werden folgende Bezeichnungen verwendet:

Polyvinylpyrrolidon vom MG 2000 - 3000 = Polyvinylpyrrolidon I
Polyvinylpyrrolidon vom MG 7000 - 11000 = Polyvinylpyrrolidon II
Polyvinylpyrrolidon vom MG 28000 - 34000 = Polyvinylpyrrolidon III
Polyvinylpyrrolidon vom MG 44000 - 54000 = Polyvinylpyrrolidon IV
Copolymer aus Vinylpyrrolidon/Vinylacetat 60/40 vom MG 45000 - 70000 = Polyvinylpyrrolidon V

Als Entstaubungsmittel wurde eine ansulfierte Petroleumfraktion verwendet.

Beispiel a

223,5 g Chlor-o-phenolsäure (2-Amino-4-chlor-6-sulfophenol) werden in 1300 ml Wasser angerührt und durch Zugabe von 90 g 50 %iger Natronlauge bei pH 8,5 in Lösung gebracht. Nach Zugabe von 400 ml halbkonzentrierter Salzsäure wird mit 1300 g Eis auf 0°C abgekühlt. Innerhalb von 30 Minuten läßt man dann 300 ml 3,33 normale Natriumnitritlösung zulaufen, die Diazotierung ist nach 1 Stunde beendet und es liegt eine klare Lösung vor.

Diese läßt man innerhalb von 30 Minuten zu einer vorbereiteten Lösung der Kupplungskomponente laufen, die durch Zugabe von 100 g 50 %iger Natronlauge zu einer Suspension von 176 g Acetessigsäureanilid in 800 g Wasser gewonnen wurde. Während der Kupplung 5 werden weitere 800 g Eis und 1000 ml Wasser zugegeben, der Kupplungs-pH-wert wird durch Zugabe von 30 g 50 %iger Natronlauge bei pH 9,5 gehalten. Die Mischung erwärmt sich auf 30°C und die Kupplung ist nach 3 Stunden beendet.

Die erhaltene Suspension wird auf 70°C erhitzt, dann werden 119 g kristallines Kobaltchloriddihydrat eingestreut. Gleichzeitig werden 57 g 30 %iges Wasserstoffperoxid zugegeben und der ReaktionspH-wert mit 20 g 50 %iger Natronlauge bei 6 gehalten. Der Ansatz geht kurzzeitig in Lösung, aber im Zuge der Abkühlung fällt das Reaktionsprodukt aus; es wird durch Absaugen auf einer Filternutsche erhalten. Es fallen 950 g des Farbstoffes an der Trockengehalt beträgt 50 % bei einem Salzgehalt von unter 1,5 %.

Beispiel 1

Das etwa 50 %ige Preßgut des in Beispiel a gewonnenen Farbstoffes wird mit 1900 g VE-Wasser angerührt und mit 60 %iger Natronlauge auf einen pH-Wert von 8 gebracht. Die Suspension wird anschliessend abgesiebt, mit 10 % (berechnet auf die Ausbeute des Sprühfarbstoffes) an Polyvinylpyrrolidon III versetzt und mittels einer Zweistoffdüse bei einer Eingangstemperatur von 120°C und einer Ausgangstemperatur von 65°C in üblicher Weise sprühgetrocknet.
Die 550 g der resultierenden pulverförmigen Zubereitung enthalten bis zu 7 % Wasser und werden mit 2 % des Entstaubungsmittels durch intensive Vermischung im Taumelmischer entstaubt.
Es resultiert eine staubarme gelbbraune Zubereitung, die maximal 3 % anorganischer Salze enthält und die sehr gute Lösungseigenschaften in wäßrigen und organischen Lösemittelgemischen zeigt.
VE-Wasser = vollentsalztes Wasser

Beispiel 2

Das etwa 50 %ige Preßgut des in Beispiel a gewonnenen Farbstoffes wird mit 1900 g VE-Wasser angerührt und mit 50 %iger Natronlauge auf pH 8 eingestellt. Die Suspension wird anschließend abgesiebt, danach wird mittels Einstoffdüse bei einer Eingangstemperatur von 170°C und einer Ausgangstemperatur von 95°C in üblicher Weise auf einen Restwassergehalt von 4 % sprühgetrocknet.
Das entstandene Pulver wird mit 15 % seines Gewichtes an Polyvinylpyrrolidon I versetzt und mit 1,5 % des Entstaubungsmittels im Turbulenzmischer homogen vermischt.
Es entstehen 550 g einer staubarmen, gelbbraunen Zubereitung, die sehr gute Lösungseigenschaften in wäßrigen und organischen Lösemittelgemischen aufweist.

Beispiel 3

Zu einem Gemisch aus 31 Teilen Dipropylenglykolmonomethylether, 37 Teilen 1,2-Dipropylenglykol, 11 Teilen Methoxypropylacetat und 6 Teilen VE-Wasser werden unter intensivem Rühren portionsweise 15 Teile des im Beispiel 2 hergestellten entstaubten Farbstoffpulvers gegeben. Man erhält eine intensiv gelbe Lösung, die nach Klärfiltration zum Spritzfärben, Tauchen und Rakeln von Holz benutzt werden kann und die eine hohe Lagerstabilität aufweist.

Beispiel 4

Zu einem Gemisch aus 31 Teilen VE-Wasser und 50 Teilen Ethanol gibt man unter Rühren 50 g/l des in Beispiel 2 hergestellten Farbstoffpulvers. Es entsteht eine gelbe Lösung, die nur etwa 2 % Löserückstand enthält und sich hervorragend zum Spritzfärben von Holz oder zum Färben von Papier eignet.

Beispiel b

Zu einer Mischung aus 1000 ml Wasser und 500 g Eis werden 234 g Schwarzsäure (2-Amino-4-sulfo-6-nitrophenol) in Form der schwefelsauren Syntheseware gegeben. Mittels 305 ml einer 3,33 normalen Natriumnitritlösung wird nun diazotiert, wobei gegebenenfalls durch Zusatz von halbkonzentrierter Salzsäure dafür gesorgt wird, daß auch am Ende der 45 Minuten beanspruchenden Diazotierung noch ein pH-Wert von 1,5 herrscht.
Nach Zugabe weiterer 700 g Eis läßt man innerhalb von 30 Minuten eine pH = 12 aufweisende Lösung der Kupplungskomponente zulaufen, die man aus 1000 ml Wasser, 174 g 1-Phenyl-3-methylpyrazolon und 90 g 50 %iger Natronlauge hergestellt hat.
Zur Kupplungssuspension gibt man 80 g Natriumacetat sowie soviel Eis und Wasser, daß die Temperatur 5°C und das Volumen 4500 ml nicht übersteigen. Nach 2 Stunden ist die Kupplung beendet und der Ansatz wird in zwei gleichgroße Hälften geteilt.
Zum ersten Teil werden 250 ml halbkonzentrierte Salzsäure gegeben und die Suspension wird bei pH = 1 für 2 Stunden bei 80°C nachgerührt. Man saugt über eine Glassinternutsche ab und erhält nach dem Waschen mit VE-Wasser 645 g einer Farbstoffpaste, die einen Trockengehalt von 30 % aufweist.
Zum zweiten Teil werden 250 ml halbkonzentrierte Salzsäure gegeben und die Suspension wird mit 130 g eines basischen Chrom(formiat/sulfat)es versetzt, das einen Chromgehalt von 20 % aufweist. Bei einem pH-Wert von 1 und Temperaturen um 135°C wird der Ansatz im Druckapparat bei 3-5 bar innerhalb von 5 Stunden druckchromiert.
Danach wird die Apparatur entspannt und der Farbstoff auf einer Filternutsche isoliert; man erhält nach dem Waschen mit VE-Wasser 470 g einer Paste des (1 : 1)-Chromkomplexfarbstoffes, der einen Trockengehalt von 50 % aufweist.

Die 645 g der Farbstoffpaste und die 470 g der Chromkomplexfarbstoffpaste werden mit 1500 g Wasser angerührt und auf 90°C erhitzt. Bei der Bildung des (1 : 2)-Chromkomplexfarbstoffes wird die freiwerdende Säure durch Zugabe von 50 g 50%iger Natronlauge zu einem pH-Wert von maximal 7 abgefangen. Es fallen 2700 g einer Farbstoffsuspension an, die 17 % des roten Chromkomplexes enthält. Der Salzgehalt der Ware liegt unter 0,5 %.

Beispiel 5

Die in Beispiel b erhaltene, etwa 17%ige Farbstoffsuspension wird gesiebt und bei einer Eingangstemperatur von 150°C und einer Ausgangstemperatur von 80°C mittels einer Zweistoffdüse versprüht.
Das erhaltene Pulver wird mit 10 % seines Gewichtes an Polyvinylpyrrolidon I versetzt und mit 1 % des Entstaubungsmittels im Taumelmischer homogen vermischt.
Es entstehen 550 g einer staubarmen, roten Zubereitung, die exzellente Lösungseigenschaften in organischen und wäßrigen Lösemittelgemischen aufweist; der Restfeuchtegehalt beträgt 6 %, der Gehalt anorganischer Salze liegt unter 3 %.

Beispiel 6

Die in Beispiel b erhaltene, 17%ige Farbstoffsuspension wird gesiebt und bei einer Eingangstemperatur von 150°C und einer Ausgangstemperatur von 85°C mittels Einstoffdüse versprüht.
Das erhaltene Pulver wird mit 20 % seines Gewichtes an Polyvinylpyrrolidon V versetzt, mit 0,5 % des Entstaubungsmittels behandelt und alles im Taumelmischer homogen vermischt.
Es entstehen 540 g einer staubarmen, roten Zubereitung, die gute Lösungseigenschaften in organischen Lösemittelgemischen aufweist; der Restfeuchtegehalt beträgt 7 % und der Anteil anorganischer Salze liegt unter 3 %.

Beispiel 7

Zu einem Gemisch aus 35 Teilen 1-Methoxy-2-propanol, 35 Teilen 1,2-Propylenglykol und 5 Teilen VE-Wasser werden unter intensivem Rühren portionsweise 25 Teile des im Beispiel 5 beschriebenen entstaubten Farbstoffpulvers gegeben. Man erhält eine intensiv rote Lösung, die nach Klärfiltration zum Spritzfärben von Holz benutzt werden kann; auch das Tauchen und Rakeln ist möglich.

Beispiel 8

Zu einem Gemisch aus 50 Teilen Wasser und 50 Teilen Ethanol gibt man unter Rühren 50 g/l des im Beispiel 5 hergestellten Farbstoffpulvers. Es entsteht eine rote Lösung, die nur etwa 4 % Löserückstand enthält und sich hervorragend zum Spritzfärben von Holz oder zum Färben von Papier eignet.

Beispiel c

Zu einer Suspension von 234 g Nitraminsäure (2-Amino-4-nitro-6-sulfophenol) in 1000 ml Wasser werden 100 ml halbkonzentrierter Salzsäure gegeben und die Temperatur wird durch Zugabe von 300 g Eis auf 0°C abgesenkt. Innerhalb von 30 Minuten laufen jetzt 300 ml 3,33 normale Natriumnitritlösung ein; nach 30 Minuten bei 5-10°C ist die Diazotierung beendet.
Es werden weitere 300 g Eis zugegeben, woraufhin innerhalb von 30 Minuten bei einer Temperatur von maximal 15°C die Kupplungskomponente zuläuft, die man durch Zugabe von 90 g 50%iger Natronlauge zu einer Suspension von 174 g 1-Phenyl-3-methylpyrazolon in 1000 ml Wasser hergestellt hat. Man gibt 90 g wasserfreies Natriumacetat zu, so daß der pH-Wert nicht über 5 ansteigt und rührt 4 Stunden bis zur Beendigung der Kupplungsreaktion nach. Dann werden 35 g Salicylsäure zugegeben und alles mit 260 g eines basischen Chrom(formiat/sulfat)es versetzt, das einen Chromgehalt von 20 % aufweist. Es wird ein pH-Wert von 4 eingestellt und dann alles auf 100°C erhitzt; der Ansatz geht innerhalb einer Stunde als (1:2)-Komplex in Lösung, wenn mit halbkonzentrierter Natronlauge ein pH-Wert von 4,5 gehalten wird. Die Mischung wird jetzt mit 400 ml halbkonzentrierter Salzsäure innerhalb von 2 Stunden auf pH = 1,8 gestellt und 4 Stunden bei 100°C gerührt. Nun werden weitere 80 ml halbkonzentrierte Salzsäure zugegeben, der pH-Wert somit auf 1,4 gestellt und der Ansatz weitere 4 Stunden unter Rückfluß gerührt, bis die Überführung in die Suspension des (1 : 1)-Komplexes beendet ist.
Nach Zugabe von weiteren 80 ml halbkonzentrierter Salzsäure wird ein pH-Wert von 1 eingestellt, der Ansatz durch Zugabe von Eis/Wasser bis zu einem Volumen von 7500 ml auf 60°C abgekühlt und alles über eine Filternutsche isoliert. Nach dem Waschen mit VE-Wasser erhält man 780 g einer orangen Farbstoffpaste, die einen Trockengehalt von 60 % aufweist.

Die so gewonnene Paste des (1:1)-Chromkomplexes wird in eine Suspension des nicht chromierten Farbstoffes eingetragen, die man wie folgt erhalten hat:

295 g 6-Nitrodiazoxydsäure werden in 1000 ml VE-Wasser suspendiert und mit 30 g wäßrigen Ammoniaks versetzt. Hierzu läßt man die Lösung der Kupplungskomponente innerhalb von 10 Minuten zulaufen, die man durch Zugabe von 120 g 50 %iger Natronlauge zu einer Suspension von 144 g β-Naphthol in 1000 ml VE-Wasser hergestellt hat.

Die Temperatur des Kupplungsgemisches darf auf 50°C ansteigen, während der pH-Wert innerhalb der 1 Stunde erfordernden Kupplung mit weiteren 60 g 50%iger Natronlauge auf pH = 10,5 gehalten wird.

Der Ansatz wird auf pH = 6 gestellt und 2 Stunden lang auf 90°C erhitzt; dabei wird mit 50%iger Natronlauge die freiwerdende Säure abgefangen. Man erhält 3500 g einer braunen Farbstofflösung, die 27 % des (1:2)-Komplexes enthält; der Salzgehalt der Ware liegt unter 0,7 %.

Beispiel 9

Die in Beispiel c erhaltene Lösung wird noch heiß weiterverarbeitet; hierzu wird zunächst mit VE-Wasser auf 23 % Feststoffgehalt verdünnt, gesiebt und alles bei einer Eingangstemperatur von 160°C und einer Ausgangstemperatur von 80°C mittels einer Einstoffdüse versprüht.

Das erhaltene Pulver wird mit 8 % seines Gewichtes an Polyvinylpyrrolidon I und mit 1,5 % seines Gewichtes an Entstaubungsmittel im Turbulenzmischer homogen vermischt.

Es entstehen 1200 g einer staubarmen braunen Zubereitung mit einem Restfeuchtegehalt von 11 %, die maximal 3 % anorganischer Salze enthält, und die sehr gute Lösungseigenschaften in organischen und wäßrigen Lösemittelgemischen aufweist.

Beispiel 10

Die in Beispiel c erhaltene Lösung wird im Umluftschrank innerhalb von 2 Tagen bei 70°C eingetrocknet, der erhaltene Rückstand mittels einer Kugelmühle vermahlen. Die 1000 g des so erhaltenen Pulvers werden mit 11 % ihres Gewichtes an Polyvinylpyrrolidon II und mit 1,5 % des Entstaubungsmittels im Turbulenzmischer homogen vermischt.

Die entstehenden 1200 g einer staubarmen braunen Zubereitung mit einem Restfeuchtegehalt von 8 %, die noch maximal 3 % anorganischer Salze enthält, zeigen exzellente Lösungseigenschaften in organischen und wäßrigen Lösemittelgemischen.

Beispiel 11

In ein Gemisch aus 39 Teilen 1-Methoxy-2-propanol und 39 Teilen Butyldiglykol werden unter intensivem Rühren portionsweise 22 Teile des im Beispiel 9 erhaltenen staubarmen Pulvers eingetragen.

Man erhält eine intensiv braune Lösung, die nach Klärfiltration zum Spritzfärben von Holz oder zum Tauchen bzw. Rakeln desselben benutzt werden kann, und die eine hohe Lagerstabilität aufweist.

Beispiel 12

Zu einem Gemisch aus 50 Teilen Wasser und 50 Teilen Ethanol gibt man unter Rühren 50 g/l des im Beispiel 9 hergestellten Farbstoffpulvers.

Es entsteht eine braune Lösung, die nur etwa 5 % Löserückstand enthält und sich hervorragend zum Spritzfärben von Holz oder zum Färben von Papier eignet.

Beispiel d

295 g 6-Nitrodiazoxydsäure werden in 1000 ml Wasser suspendiert und mit 30 g Ammoniumsulfat versetzt. Hierzu läßt man die Lösung der Kupplungskomponente innerhalb von 10 Minuten zufließen, die man durch Zugabe von 120 g 50 %iger Natronlauge zu einer Suspension von 144 g β-Naphthol in 1000 ml Wasser hergestellt hat.

Die Temperatur des Kupplungsgemisches, welches intensiver Rührung bedarf, kann auf 50°C ansteigen, derweil der pH-Wert während der 1 Stunde erfordernden Kupplung durch Zugabe weiterer 60 g 50 %iger Natronlauge bei pH = 10,5 gehalten wird.

Nun werden 20 g Salicylsäure zugegeben und alles mit 130 g eines basischen Chrom(formiat/sulfat)es versetzt, das einen Chromgehalt von 20 % aufweist. Es wird ein pH-Wert von 4 eingestellt und dann alles auf 100°C erhitzt; der Ansatz geht innerhalb von 2 Stunden als (1 : 2)-Komplex in Lösung, wenn mit 50%iger Natronlauge ein pH-Wert von 4,5-gehalten wird.

Über einen Zeitraum von 12 Stunden wird nun zunächst schnell, dann zunehmend langsamer soviel 25%ige Schwefelsäure bei Rückflußtemperatur zugetropft, daß letztendlich ein pH-Wert von 1 erreicht wird.

Die ausgefallene Suspension stellt (auf molarer Basis) ein 50/50 Gemisch des nicht chromierten Farbstoffes sowie des (1 : 1)-Chromkomplexes dar und wird mit Hilfe einer Filternutsche isoliert.

Nach Waschen mit VE-Wasser enthält man einen feuchten Filterkuchen im Gewicht von 1950 g, der einen Trockengehalt von 25 % aufweist.

Die Paste wird mit 500 ml VE-Wasser angeteigt, mit 20 g Salicylsäure versetzt und unter Erhitzen auf 90°C mit soviel 50 %iger Natronlauge versetzt, daß alles in Lösung geht und sich ein End-pH-Wert von 7 einstellt.

Nach 1,5 Stunden erhält man 2500 g einer tiefschwarzen Lösung, die 20 % des (1:2)-Chromkomplexes enthält und deren Salzgehalt unter 0,5 liegt.

Beispiel 13

Die in Beispiel d erhaltene Lösung wird über ein Sieb mit 10.000 Maschen/cm$^2$ gegeben, mit 10 % (berechnet auf die Ausbeute des Sprühfarbstoffes) Polyvinylpyrrolidon I versetzt und mittels einer Zweistoffdüse bei einer Eingangstemperatur von 150°C und einer Ausgangstemperatur von 70°C in üblicher Weise sprühgetrocknet.

Die erhaltenen 575 g der resultierenden pulverförmigen Zubereitung enthalten 5 % Wasser und werden mit 1,5 % des Entstaubungsmittels durch intensive Vermischung im Taumelmischer vermischt. Es resultiert eine staubarme schwarze Zubereitung, die maximal 2,5 % anorganischer Salze enthält, und die sehr gute Lösungseigenschaften in wäßrigen und organischen Lösemittelgemischen zeigt.

Beispiel 14

Die in Beispiel d erhaltene Lösung wird über ein Sieb mit 10.000 Maschen/cm$^2$ gegeben und bei einer Eingangstemperatur von 155°C und einer Ausgangstemperatur von 75°C mittels Zweistoffdüse in üblicher Weise auf einen Restwassergehalt von 4 % sprühgetrocknet.

Das entstandene Pulver wird mit 5 % seines Gewichtes an Polyvinylpyrrolidon V und weiteren 5 % seines Gewichtes an Polyvinylpyrrolidon II vermischt und mit 2,5 % des Entstaubungsmittels im Turbulenzmischer homogen vermischt.

Es entstehen 575 g einer staubarmen, schwarzen Zubereitung, die maximal 2,5 % anorganischer Salze enthält, und die exzellente Löslichkeiten in wäßrigen und organischen Lösemittelgemischen aufweist.

Beispiel 15

In ein Gemisch aus 70 Teilen 1-Methoxy-2-propanol und 5 Teilen VE-Wasser werden unter intensivem Rühren portionsweise 25 Teile des im Beispiel 13 erhaltenen staubarmen Pulvers eingetragen.

Man erhält eine tiefschwarze Lösung, die nach Klärfiltration zum Spritzfärben von Holz oder zum Tauchen bzw. Rakeln dieses Materials benutzt werden kann, und die eine hohe Lagerstabilität aufweist.

Beispiel 16

Zu einem Gemisch aus 50 Teilen Wasser und 50 Teilen Ethanol gibt man unter Rühren 50 g/l des im Beispiel 13 hergestellten Farbstoffpulvers.

Es entsteht eine schwarze Lösung, die nur etwa 1 % Löserückstand enthält und sich hervorragend zum Spritzfärben von Holz oder zum Färben von Papier eignet.

Beispiel e

468 g Nitraminsäure werden in 2500 ml Wasser gut verrührt und mit 240 ml halbkonzentrierter Salzsäure versetzt; mit Wasser und Eis stellt man bei einer Temperatur von 7°C ein Volumen von 5000 ml ein.

Hierzu läßt man innerhalb von 45 Minuten 600 ml 3,33 normaler Natriumnitritlösung zulaufen; die Diazotierung ist nach 1 Stunde beendet.

Die Diazoverbindung läßt man nun innerhalb von 20 Minuten zu einer vorbereiteten Lösung der Kupplungskomponente laufen, die man durch Zugabe von 140 g 50%iger Natronlauge zu einer Suspension von 352 g Acetessigsäureanilid in 5000 ml Wasser erzeugt hat.

Die Lösung der Kupplungskomponente wird durch Zugabe von 120 g Natriumbicarbonat zu einem pH-Wert von 9,5 gepuffert und mit Wasser und Eis bei einer Temperatur von 7°C auf ein Volumen von 11000 ml gestellt.

Die Kupplungsreaktion erfordert 30 Minuten, in denen sich der Ansatz auf 15°C erwärmen darf. Man stellt mit 120 g Essigsäure auf einen pH-Wert von 6,8, verdünnt weiter auf 18000 ml und erhitzt auf 80°C.

Innerhalb von 15 Minuten trägt man jetzt 240 g Kobalt(II)chlorid krist. ein; anschließend werden 60 g einer 30 %igen wäßrigen Wasserstoffperoxidlösung zugegeben.

Nachdem man noch 30 Minuten bei 80°C nachgerührt und den pH-Wert gegebenenfalls mit Essigsäure auf 5,5 stabilisiert hat, ist die Kobaltierung beendet.

Man erhält 22000 g einer gelben klaren Lösung, die 4 % des 1 : 2-Co-Farbstoffes enthält.

Die Lösung wird ultrafiltriert, um Salz zu entfernen und die Konzentration des Farbstoffes zu erhöhen.

Es fallen 4000 g Retentat an, die 23 % des Farbstoffes enthalten.

Beispiel 17

Die im Beispiel e erhaltenen 4000 g gelbbrauner Lösung werden mit 5 % des angestrebten Endvolumens Butyldiglykol versetzt; dann rührt man portionsweise 50 g Kieselgur ein und filtriert über ein in eine Drucknutsche eingespanntes Filtertuch aus Polypropylenköper.

Es wird mit etwa 4 % des Probenvolumens Wasser nachgewaschen, die vereinigten Filtrate dann mit 7 % des Polyvinylpyrrolidons II in Form seiner 50 %igen wäßrigen Lösung in Wasser versetzt.

Abschließend wird mit weiteren etwa 6 % VE-Wasser unter ATR-spektroskopischer Kontrolle auf die erwünschte Endfarbstärke eingestellt.

Es werden 5150 g einer gelbbraunen, auch bei tiefen Temperaturen lagerstabilen Farbstofflösung erhalten; sie eignet sich hervorragend für das Spritzfärben von Leder sowie dessen Faßfärbung.

ATR = Abgeschwächte Totalreflexion

Beispiel f

250 g Diazoxydsäure werden in 1000 ml Wasser suspendiert und mit 30 g Ammoniumsulfat versetzt. Hierzu läßt man die Lösung der Kupplungskomponente innerhalb von 30 Minuten zufließen, die man durch Zugabe von 120 g 50 %iger Natronlauge zu einer Suspension von 144 g β-Naphthol in 1000 ml Wasser hergestellt hat.

Die Temperatur des Kupplungsgemisches, welches intensiver Rührung bedarf, erhöht sich zunächst von selbst; später wird auf 70°C erhitzt. Während der 1 ,5 Stunden erfordernden Kupplungsreaktion wird durch Zugabe weiterer 60 g 50 %iger Natronlauge ein pH-Wert von 10 gehalten.

Nun werden 20 g Salicylsäure zugegeben und alles mit 130 g eines basischen Chrom(formiat/sulfat)es versetzt, das einen Chromgehalt von 20% aufweist. Es wird ein pH-Wert von 4 eingestellt und dann alles auf 100°C erhitzt. Der Ansatz geht innerhalb von 2 Stunden als (1 : 2)-Komplex in Lösung, wenn mit 50 %iger Natronlauge ein pH-Wert von 5 gehalten wird. Über einen Zeitraum von 12 Stunden wird nun zunächst schnell, dann zunehmend langsamer soviel 25 %ige Schwefelsäure bei Rückflußtemperatur zugetropft, daß letztendlich ein pH-Wert von 1,5 erreicht wird.

Die ausgefallene Suspension stellt (auf molarer Basis) ein 50/50 Gemisch des nicht chromierten Farbstoffes sowie des (1 : 1)-Chromkomplexfarbstoffes dar und wird mit Hilfe einer Filternutsche isoliert. Nach Waschen mit VE-Wasser erhält man einen feuchten Filterkuchen vom Gewicht 1500 g, der einen Trockengehalt von 30 % aufweist.

Die Paste wird mit 700 ml VE-Wasser angeteigt, mit 20 g Salicylsäure versetzt und unter Erhitzen auf 90°C mit soviel 50 %iger Natronlauge versetzt, daß alles in Lösung geht und sich ein End-pH-Wert von 6,5 einstellt.

Nach 1,5 Stunden erhält man 2350 g einer dunkelblauen Lösung, dre 19 % des (1 : 2)-Chromkomplexes enthält und deren Salzgehalt unter 0,6 % liegt; das UV-Vis-Spektrum zeigt Maxima bei 576 und 376 nm.

Beispiel 18

Die 2350 g der im Beispiel f erhaltenen Lösung werden mit 3 % des angestrebten Endvolumens Butylglykol versetzt; dann werden bei 80°C 20 g Arbocel® (Filtrierhilfsmittel) portionsweise eingerührt und der Ansatz über ein in eine Drucknutsche eingespanntes Filtertuch aus Polypropylenköper klärfiltriert. Man wäscht mit etwa 4 % des Probenvolumens VE-Wasser nach und gibt 2 % an Polyvinylpyrrolidon IV in Form seiner 50 %igen Lösung in Wasser zu.

Abschließend wird mit etwa weiteren 4% VE-Wasser unter ATR-spektroskopischer Kontrolle die erwünschte Endfarbstärke eingestellt.

Es werden 2700 g einer dunkelblauen, sehr lagerstabilen Farbstofflösung erhalten, die bei allen anwendungsrelevanten Temperaturen frei fließfähig und leicht pumpbar bleibt, und die sich exzellent zum Färben von Leder eignet.

Beispiel 19

Die 3500 g der im Beispiel c erhaltenen tiefbraunen Lösung werden mit 5% des angestrebten Endvolumens Butyldiglykol versetzt, dann werden bei 80°C 50 g Kieselgur eingerührt und der Ansatz über ein in eine Drucknutsche eingespanntes Filtertuch aus Polypropylenköper klärfiltriert.

Man wäscht mit etwa 7 % des Probenvolumens VE-Wasser nach und gibt 5 % des Polyvinylpyrrolidons II in Form seiner 50 %igen Lösung in Wasser zu.

Abschließend wird mit etwa weiteren 7 % VE-Wasser unter ATR-spektroskopischer Kontrolle die erwünschte Endfarbstärke eingestellt.

Es werden 4400 g einer dunkelbraunen, sehr lagerstabilen und auch bei tiefen Temperaturen pump- und spritzbaren Farbstofflösung erhalten, die sich hervorragend zum Färben und Spritzfärben von Leder eignet.

Beispiel 20

Die 3500 g der im Beispiel c erhaltenen tiefbraunen Lösung werden mit 3 % Butyldiglykol und 3 % N-Methylpyrrolidon versetzt.

Dann werden bei 85°C 50 g Arbocell® eingerührt und der Ansatz über ein in eine Drucknutsche eingespanntes Tiefenfilter (Fa. Seitz) klärfiltriert.

Man wäscht mit etwa 6 % des Probenvolumens VE-Wasser nach und gibt 3 % des Polyvinylpyrrolidons V zu.

Abschließend wird mit etwa 10 % des vorliegenden Volumens VE-Wasser die erwünschte Endfarbstärke eingestellt, wobei diese an dem Ansatz entnommenen Proben UV-Vis-spektroskopisch kontrolliert wird.

Es werden 4350 g einer dunkelbraunen, niedrig viskosen Farbstofflösung erhalten, die sich insbesondere in Mischungen mit andersfarbigen Farbstofflösungen für die Lederzurichtfärbung und die Lederfaßfärbung eignet.

Beispiel 21

Die 2500 g der im Beispiel d erhaltenen Lösung werden bei 85°C mit 4% des angestrebten Endvolumens an Polytetrahydrofuran vom MG 250 versetzt. Dann werden 50 g Celite® portionsweise eingerührt und der Ansatz über ein in eine Drucknutsche eingespanntes Filtertuch aus Polypropylenköper klärfiltriert. Man wäscht mit etwa 4 % des Probenvolumens VE-Wasser nach und gibt 1,5 % an Polyvinylpyrrolidon III in Form seiner 30%igen Lösung in Wasser zu.

Abschließend wird mit weiteren etwa 4% VE-Wasser unter ATR-spektroskopischer Kontrolle die erwünschte Endfarbstärke eingestellt. Es werden 2900 g einer tiefschwarzen, sehr lagerstabilen Farbstofflösung erhalten, die sich exzellent zum Färben von Leder und Pelz eignet.

Beispiel 22

1. 2 Teile des auf 100 % Reinfarbstoffgehalt berechneten Flüssigfarbstoffes werden mit 250 Teilen destilliertem kalten Wasser vorverdünnt und anschließend bei 20°C mit weiteren 200 Teilen destilliertem Wasser versetzt.

2. Färbeverfahren für Chromhandschuhleder
100 Teile eines in üblicher Weise hergestellten, zwischengetrockneten Chromschafleders mit einer Falzstärke von ca. 0,8 mm wurden in 1000 Teilen Wasser bei einer Temperatur von 30°C mit 2 Teilen 25 %igem Ammoniak und 1 Teil eines oxethylierten Fettamins durch 120-minütiges Walken in einem Walkfaß broschiert. Nach Ablassen der Flotte wurden 1000 Teile Wasser mit einer Temperatur von 30°C zugegeben, 10 Minuten gewalkt und die Waschflotte abgelassen. Zur Färbung wurden 600 Teile Wasser und 6 Teile Farbstofflösung gemäß 1 bei einer Temperatur von 60°C zugegeben und 60 Minuten gewalkt. Anschließend wurden zweimal je 2 Teile 100 %ige Ameisensäure zugegeben und es wurde jeweils weitere 15 Minuten gewalkt. Danach wurde die Flotte abgelassen. Zur kationischen Fixierung wurden 600 Teile Wasser und 0,3 Teile 100 %ige Ameisensäure zugegeben und es wurde im Walkfaß bei einer Temperatur von 50°C 30 Minuten gewalkt. Anschließend wurden 0,5 Teile eines handelsüblichen kationischen Fixierungsmittels zugegeben und weitere 30 Minuten gewalkt. Danach wurde die Flotte abgelassen. Das Leder wurde kalt gespült, ausgereckt, hängend getrocknet und gestollt.

3. Färbeverfahren für vegetabil-synthetisch-nachgegerbtes Chromrindleder
100 Teile eines in üblicher Weise gegerbten Leders mit einer Falzstärke von 1,4 mm wurden zunächst 10 Minuten mit Wasser bei einer Temperatur von 30°C gewaschen und danach in 250 Teilen Wasser bei einer Temperatur von 30°C mit 1 Teil eisenfreiem Natriumformiat und 1 Teil Natriumbicarbonat durch 60-minütiges Walken in einem Walkfaß neutralisiert. Das Leder wurde dann 10 Minuten mit Wasser bei einer Temperatur von 30°C gewaschen. Anschließend wurde die Nachgerbung in 200 Teilen Wasser bei einer Temperatur von 30°C mit 3 Teilen eines handelsüblichen synthetischen Gerbmittels und mit 3 Teilen eines handelsüblichen vegetabilen Gerbmittels durchgeführt. Das Leder wurde 60 Minuten in der Nachgerbflüssigkeit gewalkt. Das Leder wurde anschließend zweimal mit je 250 Teilen Wasser bei einer Temperatur von 50°C durch 10-minütiges Walken gewaschen, wobei die Flotte jeweils anschließend abgelassen wurde. Zur Färbung wurden 250 Teile Wasser und 2 Teile Farbstofflösung gemäß 1 zugegeben und es wurde 60 Minuten bei 50°C gewalkt. Zur Fettung wurden anschließend 4 Teile eines handelsüblichen Fettungsmittels zugegeben und weitere 60 Minuten gewalkt. Nach Zugabe von 1 Teil 100 %iger Ameisensäure wurde weitere 60 Minuten gewalkt und die Flotte abgelassen. Danach wurde das Leder kalt gespült, ausgereckt, getrocknet, in Sägespäne eingelegt, gestollt und im Spannrahmen getrocknet.

4. Färbeverfahren für rein synthetisch-nachgegerbtes Chromrind leder

100 Teile eines in üblicher Weise gegerbten Leders mit einer Falzstärke von 1,4 mm wurden zunächst 10 Minuten mit Wasser bei einer Temperatur von 30°C gewaschen und danach in 250 Teilen Wasser bei einer Temperatur von 30°C mit 1 Teil eisenfreiem Natriumformiat und 1 Teil Natriumbicarbonat durch 60-minütiges Walken in einem Walkfaß neutralisiert. Das Leder wurde dann 10 Minuten mit Wasser bei einer Temperatur von 30°C gewaschen. Anschließend wurde die Nachgerbung in 200 Teilen Wasser bei einer Temperatur von 30°C mit 6 Teilen handelsüblichen synthetischen Gerbmitteln durchgeführt. Das Leder wurde 60 Minuten in der Nachgerbflüssigkeit gewalkt. Das Leder wurde anschließend zweimal mit je 250 Teilen Wasser bei einer Temperatur von 50°C durch 10-minütiges Walken gewaschen, wobei die Flotte jeweils anschließend abgelassen wurde. Zur Färbung wurden 250 Teile Wasser und 2 Teile Farbstofflösung gemäß 1 zugegeben und 60 Minuten bei 50°C gewalkt. Zur Fettung wurden anschließend 4 Teile eines handelsüblichen Fettungsmittels zugegeben und weitere 60 Minuten gewalkt. Nach Zugabe von 1 Teil 100 %iger Ameisensäure wurden weitere 60 Minuten gewalkt und die Flotte abgelassen. Danach wurde das Leder kalt gespült, ausgereckt, getrocknet, in Sägespäne eingelegt, gestollt und im Spannrahmen getrocknet.

5. Färbeverfahren für Chromrindleder

100 Teile eines in üblicher Weise gegerbten Leders mit einer Falzstärke von 1,4 mm wurden zunächst 10 Minuten mit Wasser bei einer Temperatur von 30°C gewaschen und danach in 250 Teilen Wasser bei einer Temperatur von 30°C mit 1 Teil eisenfreiem Natriumformiat und 1 Teil Natriumbicarbonat durch 60-minütiges Walken in einem Walkfaß neutralisiert. Das Leder wurde dann zunächst 10 Minuten mit Wasser bei einer Temperatur von 40°C und danach 10 Minuten mit Wasser bei einer Temperatur von 50°C gewaschen. Zur Färbung wurden 250 Teile Wasser und 1 Teil Farbstofflösung gemäß 1 zugegeben und 60 Minuten bei 50°C gewalkt. Zur Fettung wurden anschließend 4 Teile eines handelsüblichen Fettungsmittels zugegeben und weitere 60 Minuten gewalkt. Nach Zugabe von 0,3 Teilen 100 %iger Ameisensäure wurde weitere 30 Minuten gewalkt und die Flotte abgelassen. Danach wurde das Leder kalt gespült, ausgereckt, getrocknet, in Sägespäne eingelegt, gestollt und im Spannrahmen getrocknet.

6. Spritzfärbung von Rindoberleder mit rein-wäßriger Spritzlösung

Die wäßrige Spritzlösung wurde durch Mischen von 75 Teilen Farbstofflösung gemäß Beispiel 19 mit 925 Teilen destilliertem Wasser hergestellt. Auf ein Stück eines handelsüblichen Rindoberleders der Größe 12,5 x 18 cm wurden 14 g der wäßrigen Spritzlösung mittels einer Spritzpistole auf die Lederoberfläche aufgetragen. Anschließend wurde das Leder bei einer Temperatur von 20°C getrocknet.

7. Spritzfärbung von Rindoberleder mit lösemittelhaltiger Spritzlösung

Die lösemittelhaltige Spritzlösung wurde durch Mischen von 75 Teilen Farbstofflösung gemäß Beispiel 21 mit 325 Teilen 1-Methoxy-2-propanol hergestellt. Auf ein Stück eines handelsüblichen Rindoberleders der Größe 12,5 x 18 cm wurden 14 g der wäßrigen Spritzlösung mittels einer Spritzpistole auf die Lederoberfläche aufgetragen. Anschließend wurde das Leder bei einer Temperatur von 20°C getrocknet.

Die folgenden Farbstoffe eignen sich ebenfalls zur Herstellung erfindungsgemäßer Mischungen:

1 : 2-Cr-Komplexfarbstoffe aus den Azofarbstoffen

| | | |
|---|---|---|
| Nitraminsäure | → | 1-Phenyl-3-methylpyrazolon |
| Chlor-o-phenolsäure | → | 1-Phenyl-3-methylpyrazolon |
| Diazoxydsäure | → | 1-Phenyl-3-methylpyrazolon |
| 6-Nitrodiazoxydsäure | → | $\alpha$-Naphthol |

1 : 2-Co-Komplexfarbstoff aus dem Azofarbstoff

Pikraminsäure      $\rightarrow$      2-Amino-5-sulfonaphthalin

1 : 2-Cr-Komplexfarbstoffe aus den Azofarbstoffen

```
6-Nitrodiazoxydsäure  →   β-Naphthol
                      +
   Diazoxydsäure      →   β-Naphthol
```

sowie

```
Diazoxydsäure                      →  β-Naphthol
                                   +
2-Amino-4-methoxy-5-chlorphenol →  1-Hydroxy-5-sulfo-naphthalin
```

**Patentansprüche**

1. Flüssige oder feste Mischungen von sulfogruppenhaltigen 1:2-Metallkomplexfarbstoffen mit einem Salzgehalt von weniger als 3 Gewichts-% und Poly-N-vinylpyrrolidon oder Copolymeren aus N-Vinylpyrrolidon und Vinylacetat.

2. Feste Mischungen nach Anspruch 1 enthaltend bezogen auf ihr Gesamtgewicht 1 bis 20 % Poly-N-vinylpyrrolidon oder Copolymere.

3. Flüssige Mischungen nach Anspruch 1, enthaltend bezogen auf ihr Gesamtgewicht 1 bis 12 % Poly-N-vinylpyrrolidon oder Copolymere, Wasser und gegebenenfalls organische Lösungsmittel, wobei das Verhältnis von Wasser zu organischem Lösungsmittel größer als 1 ist..

4. Feste Mischungen nach Anspruch 1 enthaltend bezogen auf ihr Gesamtgewicht 1 bis 20 % Poly-N-vinylpyrrolidon oder Copolymere, **dadurch gekennzeichnet, daß** sie zusätzlich ein Entstaubungsmittel enthalten.

5. Verfahren zur Herstellung von Stammlösungen aus festen Mischungen gemäß Anspruch 2 durch Auflösen in Wasser, organischen Lösungsmitteln oder Mischungen aus Wasser und organischen Lösungsmitteln.

6. Verfahren nach Anspruch 5, **dadurch gekennzeichnet, daß** man als Lösungsmittel Wasser, Glykole, Glykolether, Glykolester oder Mischungen solcher Lösungsmittel verwendet.

7. Stammlösungen erhältlich gemäß dem Verfahren nach Anspruch 5.

8. Verwendung der Mischungen gemäß Anspruch 2 zur Herstellung von Stammlösungen für das Färben von Holz oder Papier.

9. Flüssige Mischungen nach Anspruch 3, enthaltend als organische Lösungsmittel Glykole, Glykolether, Glykolester, Polyether-Alkanole aus Ethylenoxid oder Tetrahydrofuran, Dimethylformamid, N-Methylpyrrolidon oder Gemische davon.

10. Verwendung der Mischungen gemäß Anspruch 3 zum Färben oder Zurichten von Leder oder Pelz.

**Claims**

1. Liquid or solid mixtures of sulfo-containing 1:2 metal complex dyes having a salt content of less than 3% by weight and poly-N-vinylpyrrolidone or copolymers of N-vinylpyrrolidone and vinyl acetate.

2. Solid mixtures as claimed in claim 1, comprising, based on their total weight, from 1 to 20% of poly-N-vinylpyrrolidone or copolymers.

**3.** Liquid mixtures as claimed in claim 1, comprising, based on their total weight, from 1 to 12% of poly-N-vinylpyrrolidone or copolymers, water and optionally organic solvents, the ratio of water to organic solvent being greater than 1.

**4.** Solid mixtures as claimed in claim 1, comprising, based on their total weight, from 1 to 20% of poly-N-vinylpyrrolidone or copolymers, further comprising a dustproofing agent.

**5.** A process for preparing stock solutions from solid mixtures as claimed in claim 2, which comprises dissolving in water, organic solvents or mixtures of water and organic solvents.

**6.** A process as claimed in claim 5, wherein the solvent used is selected from water, glycols, glycol ethers, glycol esters and mixtures thereof.

**7.** Stock solutions obtainable by the process of claim 5.

**8.** The use of the mixtures of claim 2 for preparing stock solutions for dyeing wood or paper.

**9.** Liquid mixtures as claimed in claim 3, comprising an organic solvent selected from glycols, glycol ethers, glycol esters, polyether alkanols derived from ethylene oxide or tetrahydrofuran, dimethylformamide, N-methylpyrrolidone and mixtures thereof.

**10.** The use of the mixtures of claim 3 for dyeing or finishing leather or fur.

**Revendications**

**1.** Mélanges liquides ou solides composés de colorants complexes métalliques 1:2 portants des groupes sulfoniques et présentant une teneur en sel inférieure à 3% en poids, et de la poly-N-vinylpyrrolidone ou des copolymères de N-vinylpyrrolidone et d'acétate de vinyle.

**2.** Mélanges solides selon la revendication 1 qui comprennent, par rapport à leur poids total, la poly-N-vinylpyrrolidone ou les copolymères à raison de 1% à 20%.

**3.** Mélanges liquides selon la revendication 1 qui comprennent, par rapport à leur poids total, la poly-N-vinylpyrrolidone ou les copolymères, de l'eau et éventuellement des solvants organiques à raison de 1% à 12%, où le rapport entre l'eau et le solvant organique est supérieur à 1.

**4.** Mélanges solides selon la revendication 1 qui comprennent, par rapport à leur poids total, la poly-N-vinylpyrrolidone ou les copolymères à raison de 1% à 20%, **caractérisés en ce qu'**ils contiennent également un agent anti-poussière.

**5.** Procédé pour la préparation des solutions initiales à partir de mélanges solides selon la revendication 2, au moyen d'une dissolution dans l'eau, dans les solvants organiques ou dans les mélanges d'eau et de solvants organiques.

**6.** Procédé selon la revendication 5, **caractérisé en ce que** l'on met en oeuvre, en tant que solvant, l'eau, les glycols, les éthers de glycol, les esters de glycol ou les mélanges de ces solvants.

**7.** Solutions initiales que l'on peut obtenir suivant le procédé selon la revendication 5.

**8.** Mise en oeuvre des mélanges selon la revendication 2 pour la préparation des solutions initiales destinées à la coloration du bois et du papier.

**9.** Mélanges liquides selon la revendication 3, qui comprennent, en tant que solvant organique, les glycols, les éthers de glycol, les esters de glycol, les polyéthersalcanols dérivés de l'oxyde d'éthylène ou du tétra-hydrofurane, le diméthylformamide, la N-méthylpyrrolidone ou leurs mélanges.

**10.** Mise en oeuvre des mélanges selon la revendication 3 pour la coloration ou pour le corroyage du cuir et de la fourrure.